# EUROPEAN PATENT APPLICATION

(11) **EP 0 555 588 A2**
(43) Date of publication of application: **18.08.1993**
(21) Application number: 92310987.0
(22) Date of filing: 02.12.1992
(51) Int. Cl.: A01K 27/00

(54) **Dog harness**

(71) Applicant: Sporn, Joseph S., New York, NY 10024 (US)
(72) Inventor: Sporn, Joseph S., New York, NY 10024 (US)
(74) Representative: Bridge-Butler, Alan James

(57) **Abstract**

A dog harness adapted to control a dog so that it does not strain against a leash coupled to said harness and including a collar (10,13) to encircle the dog's neck characterised by a pair of restraint loops (19)(20)the front end of each of which extends from the collar (10,13) and is adapted to pass respectively under the left and right foreleg pits of the dog and return to and pass through a sliding connection (15)(16)(27)(30) on a rear section of the collar (10,13), the second ends of said loops having means (23)(31,32)(40) for connection to a leash (25).

## Description

This invention relates to a harness for a dog, and more particularly to a harness to which a leash is attachable and which acts to inhibit the dog from straining against the leash without, however, producing a choking action.

As pointed out in the Bloom US Patent 2,233,397, when a dog strains against a leash attached to the dog harness, it is important that the harness avoids a choking effect on the throat of the dog or undue pressure on throat muscles, cords and nerves, for these may have adverse effects on the lungs and heart of the dog.

While Bloom discloses a non-choking harness, this harness does not act to discourage the dog from straining against the leash. Indeed, because the harness is non-choking, there is nothing to inhibit such straining.

The need exists, therefore, for a harness to break older dogs of the habit of straining at the leash and for training younger dogs not to strain at the leash. When a dog strains at the leash, he may, in doing so, wrest the leash from the hands of its master who then loses control of the dog. But this is perhaps a less objectionable aspect of straining, for in the case of a master of advanced years of in a relatively weakened condition, should the master hold tightly onto the strained leash to maintain control of the dog, the master may then be pulled to the ground or otherwise upset, with possibly damaging consequences.

To prevent straining at the leash, hobble type dog harnesses are known, such as the hobble harness disclosed in the Patience et al. US Patent 2,670,712, which normally permits free movement of the animal but which restricts the action of the forelegs when the dog attempts to run away or otherwise get out of control.

The Patience et al. harness includes a conventional dog collar and a shoulder strap that has hoops at its opposite ends that loosely fit over the forelegs of the dog. The shoulder strap is adjustable so that the foreleg hoops can be drawn up but not so tightly as to interfere with normal movement of the dog's forelegs. However, if the dog strains on the leash, this strain is also exerted on the shoulder strap, and the foreleg hoops are then drawn upwardly so that movement of the forelegs is restrained and the dog will be brought to a halt.

A harness of the Patience et al. type imposes a physical restraint on the forelegs, and its effectiveness depends on the strength of the dog. Thus with a small dog, this harness may be fully effective, but with a large and more powerful dog, the harness may fail to restrain the dog, particularly if he succeeds in wresting the leash from the hands of his master.

In view of the foregoing, the main object of the present invention is to provide a dog harness to which a leash is attachable and which acts to inhibit the dog from straining against the leash without, however, choking the dog or otherwise doing injury to the dog.

A significant feature of a harness in accordance with the invention is that it does not physically restrain foreleg movement and its effectiveness is not dependent on the size of the dog or its strength, for the harness will inhibit straining at the leash, regardless of the breed, size and strength of the dog.

More particularly, an object of this invention is to provide a harness of the above type which when the harnessed dog strains at the leash then acts to impose a pressure on the foreleg pits of the dog, causing the dog to cease to strain.

A harness in accordance with the invention exploits the fact that in a dog, the foreleg pits are highly sensitive, and should a pressure be applied thereto, the normal reaction of the dog is to seek to in some way relieve this pressure. This sensitivity exists regardless of the breed, size and strength of the dog, so that as long as foreleg pit pressure is applied, an immediate reaction will be obtained.

Briefly stated, these objects are attained in a dog harness to which a leash is attachable. When installed on the dog, the harness acts to inhibit the dog from straining against the leash without, however, producing a choking action.

According to the present invention a dog harness adapted to control a dog so that it does not strain against a leash coupled to said harness and including a collar to encircle the dog's neck is characterised by a pair of restraint loops the front end of each of which extends from the collar and is adapted to pass respectively under the left and right foreleg pits of the dog and return to and pass through a sliding connection on a rear section of the collar, the second ends of said loops having means for connection to a leash.

The invention can be performed in various ways and some embodiments will now be described by way of example and with reference to the accompanying drawings in which :
Figure 1 shows a dog wearing a harness in accordance with the invention;
Figure 2 is a perspective view of the harness shown in Figure 1;
Figure 3 shows the rear section of the harness collar of Figure 1;
Figure 4 is a side view of a dog wearing the harness of Figure 1 without straining on the leash attached thereto, so that the restraining cables of the harness lie loosely under the foreleg pits;
Figure 5 illustrates a strained leash which acts to apply pressure to the foreleg pits with a harness as shown in Figure 1;
Figure 6 is a perspective view of a modified form of the harness shown in Figure 1;
Figure 7 is a side view of a dog wearing a simplified harness according to the invention;
Figure 8 is a view of a dog wearing another form of harness according to the invention;
Figure 9 is a side view of a dog wearing a modified form of the harness shown in Figure 8;
Figure 10 is a side view of a dog wearing another form of harness according to the invention;
Figure 11 is a side view of the harness shown in Figure 10 ready for use; and,
Figure 12 is another view of a dog wearing a harness of the kind shown in Figures 10 and 11.

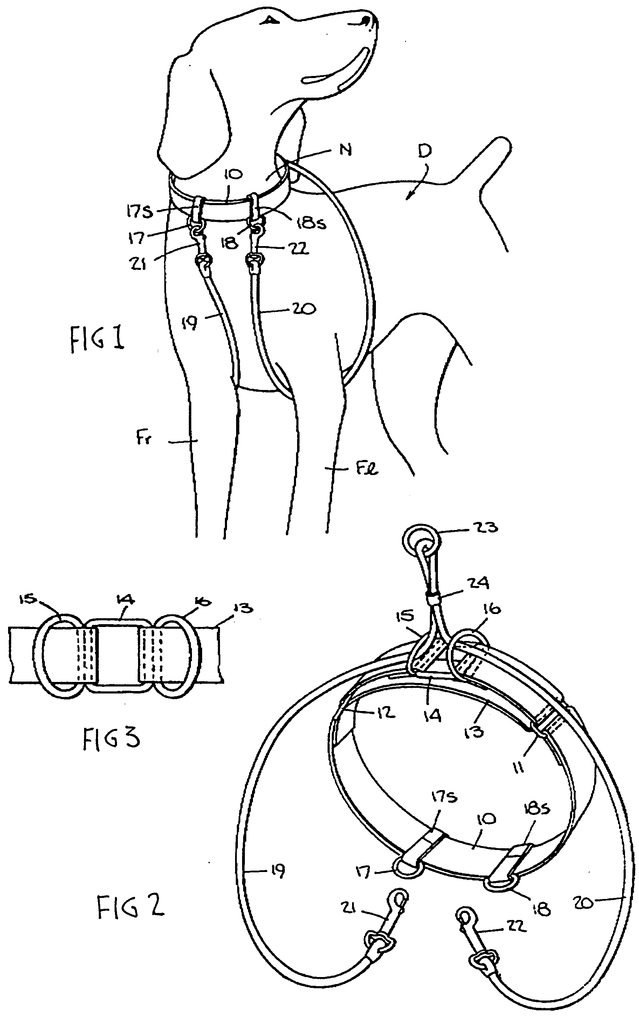

Referring now to Figures 1 to 3, a dog halter or harness in accordance with the invention includes a collar formed of synthetic fabric strapping or similar material, having a front section 10 and a rear section 13. The ends of front section 10 terminates in rectangular metal rings 11 and 12. As best seen in Figure 2, each end of front section 10 is folded over one leg of the ring and is secured to the strap.

Rear collar section 13 is looped through rings 11 and 12 and its ends are joined together by a rectangular ring 14 to whose legs these ends are attached to form a closed loop. The respective ends of rear collar section 13 are folded over the opposing legs of ring 14 and are secured to the strap. Linked to the folded-over ends of rear section 13 are metal slip rings 15 and 16 which are adjacent to each other on the rear of the rear collar section loop. All metal rings are other metal components of the harness are preferably made of stainless steel or chrome-plated steel, brass or other non-corroding metal having high strength.

Attached at spaced positions to front section 10 of the collar are right and left metal D-rings 17 and 18. This attachment is effected by fabric strips 17S and 18S which are folded over to encircle the strap of the front section of the collar and are sewn or otherwise secured thereto.

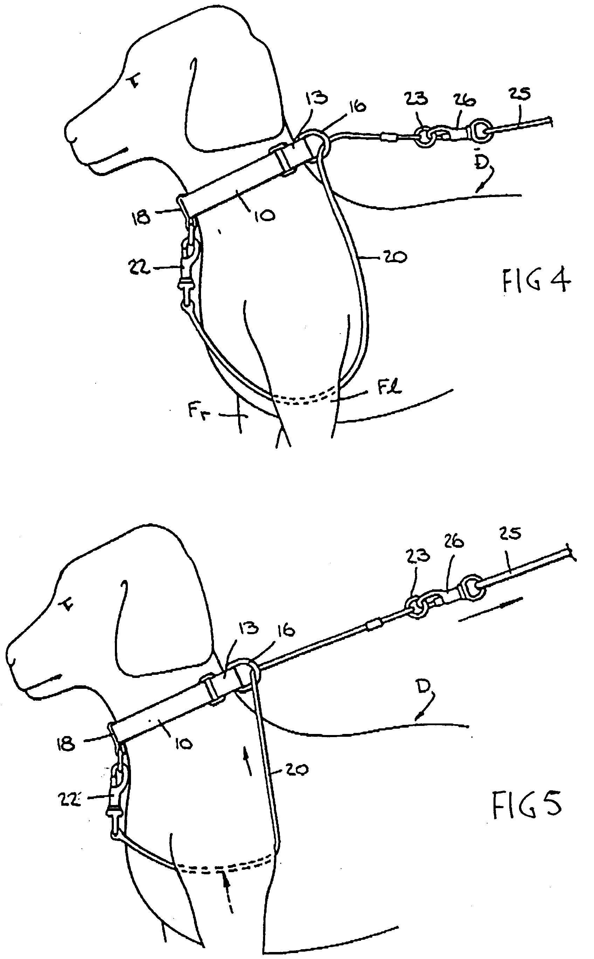

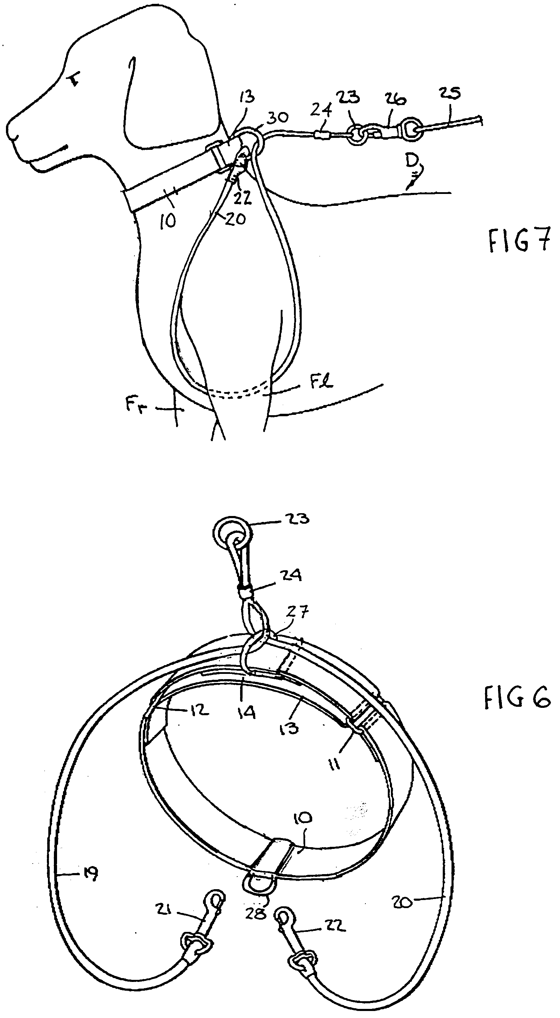

Also provided are right and left restraint loops formed by cables 19 and 20 made of braided fabric or other flexible line material having high strength. The leading ends of restraint cables 19 and 20 terminate in retractable metal snap connectors 21 and 22 which are connectable to right and left D-rings 17 and 18 on the front section of the collar, as shown in Figure 1. Cables 19 and 20 pass through the respective slip rings 15 and 16 linked to the rear section of the collar which thus act as sliding connections and terminate in a metal coupler 23 to which a leash is attachable. The right and left restraint cables 19 and 20 are preferably formed of a single length of cable folded in half to which coupler 23 is linked at its fold. The portions of cables 19 and 20 extending between the fold and slip rings 15 and 16 are held together in parallel relation by a metal slider 24 which can be adjusted up or down to lengthen or shorten restraint cables 19 and 20 to accommodate these cables to the size of the dog being harnessed. In installing the halter or harness on a dog D, as shown in Figure 1, the collar formed by front and rear sections 10 and 13 is slipped over the head of the dog to encircle its neck N. Because of the closed loop formation of rear section 13, its effective length, when installed, is determined by the distance between rings 11 and 12 at the ends of the front section 10 through which the loop is threaded. The collar will therefore adjust itself to the size of the dog's neck, the length of the loop being short for a small size neck and large for a large size neck. After the collar is in place, right and left restraint cables 19 and 20 are guided over the dog's shoulder and under its right and left forelegs Fᵣ and Fₗ. Connector 21 is then snapped onto right D-ring 17 on the front section of the collar and connector 21 is snapped onto left D-ring 18. As shown in Figures 4 and 5, after the dog is harnessed, attached to harness coupler 23 is the metal snap connector 26 at the end of a leash 25, so that the dog is now leashed.

Leash 25 is therefore now coupled to restraining cables 19 and 20 of the dog harness. When no strain is imposed on the leash, the restraining cables 19 and 20, as shown in Figures 1 and 2, are loose, and while they go under the forelegs of the dog and lie adjacent the pits of these forelegs Fᵣ and Fₗ, they do not press against these pits.

When, however, as shown in Figure 5, the dog D strains against leash 25, this strain exerts a pulling force on restraint cables 19 and 20, and as the cables engage and tighten against the foreleg pits, the cables then impose an inward pressure against these pits.

As pointed out previously, it has been found that in a dog, the foreleg pit regions are exceptionally sensitive, and dog, when pressure is applied to these regions, will seek immediately in some way to relieve this pressure. A typical dog will quickly find that this is best done by relaxing his strain on the leash, for in doing so, the restraint cables are again loosened and the pit pressure is withdrawn.

While the harness is adapted to fit dogs in a range of sizes, its effectiveness as a means to control a dog is independent of the size and strength of the dog, for in all cases the dog will react quickly to pressure applied to the foreleg pits.

The harness, therefore, is a valuable asset in dog training, for it provides the trainer who holds the leash with fingertip control of the dog's movement. It only takes a slight tug on the leash to cause the dog to react. And while a strained leash also imposes a pull on the dog collar, this will not produce a choking effect, for the dog will normally react and relieve the strain on the leash well before this strain reaches a level producing a choking action.

While there has been shown and described a preferred embodiment of a strain-reducing dog harness in accordance with the invention, it will be appreciated that many changes and modifications may be made therein without, however, departing from the essential spirit thereof. Thus instead of a two-section adjustable collar, one may use a single section buckled collar that can be fitted onto dogs having different neck sizes.

In the construction shown in Figure 6 the same reference numerals are used to indicate similar parts as those in Figures 1 to 5. In this construction however the slip rings 15 and 16 connected to the rear section of the collar are replaced by a single slip ring 27 and the right and left D-rings 17 and 18 on the front section of the collar are replaced by a single D-ring 28 to which both snap connectors 21 and 22 can be connected. It will be seen that the method of threading the cables 19 and 20 through the slip ring 27 is reversed with regard to what is shown in Figure 2.

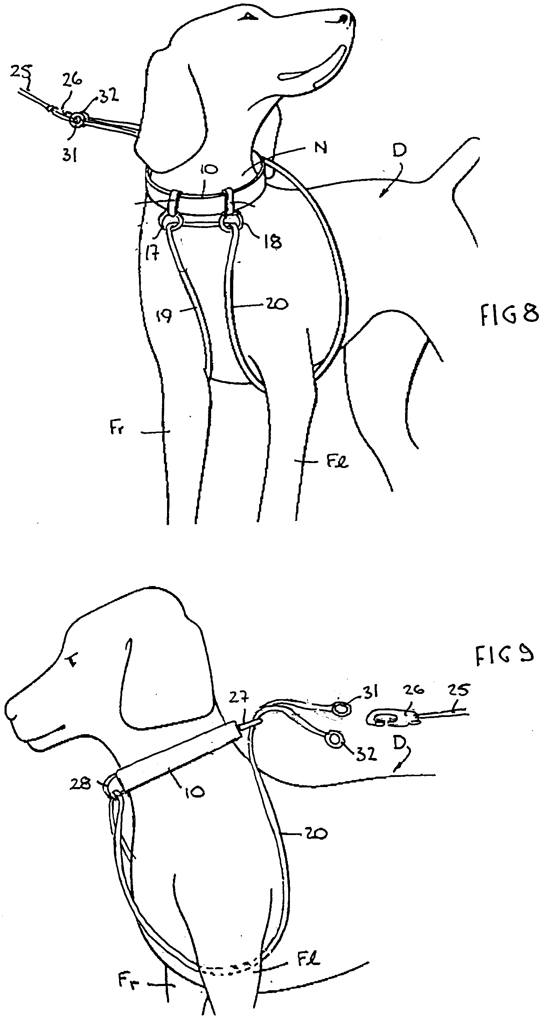

Figure 7 shows a simplified construction in which the same reference numerals are used to indicate similar parts. The collar is provided with a single slip ring 30 at its rear section 13 and the restraint loops are again formed from a single length of cable having a coupler 23 and a metal slider 24. In this arrangement however the D-rings 17, 18 and 28 of the previous constructions are not required and the snap connectors 21 and 22 are connected to the slip ring 30.

Figures 8 and 9 show harness constructions in which a single length of material is again used to form the restraint loops but in these arrangements the cable forming the restraint loops is provided with coupling rings 31, 32. The front section of the collar is again provided with D-rings 17 and 18 or a single ring 28 and the coupling rings 31, 32 are small enough to pass through them. Thus, the cable forming loops is simply passed through the rings 17 and 18 or the ring 28, under the left and right forelegs of the animal and then through the ring 27 or through the double rings 15 and 16 on the rear section of the collar. The two rings 31 and 32 are then attached to the snap connector 26 at the end of the leash 25.

Figures 10, 11 and 12 show another convenient construction in which the collar is incorporated into the harness by being connected to the loops, and the same reference numerals are used to indicated similar parts to those in the previous Figures.

As shown in Figure 11 the harness and collar are formed from a single length of strong fabric strapping or similar material to each end of which is connected a coupler ring 40. At an intermediate point an extension 41 is secured to the length of material, the free end of this extension carrying a snap connector 42. A connector ring 43 is provided on the length of material and this may be either firmly connected in position or held loosely and a slip ring 44 is also provided which is preferably permanently secured to the material.

In order to use the harness it is placed in position on the animal as shown in Figures 10 and 11. Thus, the centre part of the length of material, indicated by reference numeral 45, is passed around the dog's neck and the snap connector 42 is connected to the ring 43 to provide a collar, as is most clearly shown in Figure 12. The restraint loops provided by the remainder of the material are now passed around the dog's right and left forelegs and the rings 40 pass through the sliding connector provided by the slip ring 44. The rings 40 can now be connected to the snap connector 26 of the leash 25.

It will be appreciated that the action of all the constructions shown in Figures 6 to 12 is similar to that described with regard to Figures 1 to 5 in as much that the harness causes a pressure on the left and right foreleg pits of the dog when it strains against the leash.

## Claims

1. A dog harness adapted to control a dog so that it does not strain against a leash coupled to said harness and including a collar (10,13) to encircle the dog's neck characterised by a pair of restraint loops (19)(20) the front end of each of which extends from the collar (10,13) and is adapted to pass respectively under the left and right foreleg pits of the dog and return to and pass through a sliding connection (15)(16)(27)(30) on a rear section of the collar (10,13), the second ends of said loops having means (23)(31,32)(40) for connection to a leash (25).

2. A dog harness as claimed in claim 1 characterised in that the first ends of said loops (19,20) extend from said sliding connection (30) on the rear section (13) of said collar (10,13).

3. A dog harness as claimed in claim 1 characterised in that the first ends of said loops (19,20) extend from a connection (17,18)(28) at the front section (10) of said collar (10,13).

4. A dog harness as claimed in claim 1 or claim 2 characterised in that said loops (19,20) are provided by a single length of material, the first end of each loop (19,20) passing through a sliding connection (17,18)(28) at the front section (10) of the collar (10,13).

5. A dog harness as claimed in claim 1 or claim 2 characterised in that said collar (10,13) and said loops (19,20) are provided as a single length of material with an extension (41) secured at an intermediate point and provided with connection means (42) for forming and securing the front section (10) of the collar (10,13).

6. A dog harness as claimed in claim 3 characterised in that means (21,22) are provided for releasably securing the first ends of the loops (19,20) to the front section (10) of the collar (10,13).

7. A dog harness as claimed in claim 6 characterised in that both of said loops (19,20) pass through the same single sliding connection (27) on the rear section (13) of the collar (10,13).

8. A dog harness as claimed in claim 6 characterised in that each of said loops (19,20) pass through an individual slide connection (15,16) on the rear section (13) of the collar (10,13).

9. A dog harness as claimed in claim 7 or claim 8 characterised in that said loops (19,20) are provided by cables whose second ends terminate in a coupler (23) for a leash (25), the cables running through respective slip rings (15,16) and from there over the shoulder of the dog and under its forelegs (Fᵣ, Fₗ), said cables having first ends which are attachable to left and right sites (17,18) on the front section (10) of the collar (10,13).

10. A dog harness as claimed in claim 9 characterised in that the front section (10) of the collar (10,13) terminates at its ends thereof in rings (11,12), and the rear section (13) of the collar is threaded through the rings (11,12) and its ends are joined together to form a closed loop.

11. A dog harness as claimed in claim 10 characterised in that the ends of the rear section (13) are joined together by a rectangular ring (14), one leg which is attached to one end of the rear section and another leg to the other end of the rear section, said slip rings (15,16) being connected to the ends of the rear section (10).

12. A dog harness as claimed in any one of preceding claims 9 to 11 characterised in that said cables (19,20) are formed from a single length of line that is folded in half to define the pair of restraint cables (19,20), the coupler (23) being at the fold thereof.

13. A dog harness as claimed in any one of preceding claims 9 to 12 characterised in that said collar (10,13) is formed by fabric strapping.

14. A dog harness as claimed in any one of preceding claims 9 to 13 characterised by including a slider (24) encircling the cables (19,20) at a position between the coupler (23) and the slip rings (15,16).

15. A dog harness as claimed in any one of preceding claims 9 to 14 characterised in that said sites have D-rings (17,18) attached thereto and the leading ends of the cables (19,20) terminate in snap connectors (21,22) attachable to the D-rings (17,18).
